# EUROPEAN PATENT SPECIFICATION

(11) **EP 1 884 872 B1**
(45) Date of publication and mention of the grant of the patent: **26.02.2014**
(21) Application number: 07013794.8
(22) Date of filing: 13.07.2007
(51) Int. Cl.: G06F 11/07

(54) **Method and system for using application development data to create support documents**
Verfahren und System zur Verwendung von Anwendungsentwicklungsdaten zum Erstellen von Hilfsdokumenten
Procédé et système pour utiliser des données de développement d'applications pour créer des documents de support

(30) Priority: 26.07.2006 US 492829
(43) Date of publication of application: 06.02.2008
(73) Proprietor: HEWLETT-PACKARD DEVELOPMENT COMPANY, L.P., Houston, TX 77070 (US)
(72) Inventor: Koff, Caroline N., Ft Collins, CO 80528-9599 (US); Brothers, William, Roseville, CA 95747 (US)
(74) Representative: Zimmermann, Tankred Klaus

(56) References cited:
- US-A1- 2005 038 832
- US-A1- 2006 143 594
- CHRISTIANO DE OLIVEIRA BRAGA ET AL.: "Documentu: A Flexible Architecture for Documentation Production Based on a Reverse-engineering Strategy" SOFTWARE MAINTENANCE: RESEARCH AND PRACTICE, [Online] no. 10, 11 May 1998 (1998-05-11), pages 279-303, XP002558265 Retrieved from the Internet: URL:http://www3.interscience.wiley.com/cgi -bin/fulltext/10006479/PDFSTART> [retrieved on 2009-12-01]
- SUN MICROSYSTEMS, INC.: "javadoc - The Java API Documentation Generator"[Online] 2002, XP002558266 Retrieved from the Internet: URL:http://java.sun.com/j2se/1.4.2/docs/to oldocs/windows/javadoc.html> [retrieved on 2009-12-01]

## Description

### BACKGROUND

Software application development engineers encode error messages, or fault notification points, in the application source code that can be triggered when the applications are executed. In some cases, the development engineers manually prepare a list or file identifying the fault notification points while developing an application. When errors occur during run time, or execution, of an application, the end-users can access support information to determine what the errors mean and how to remedy the errors.

Techniques for developing support information include preparation of support documents by support engineers, who attempt to identify all of the fault notification points encoded in the applications by the development engineers and develop the support information explaining the fault notification points, including actions the end-users can take to remedy the faults. Other support information development techniques include manual tracking and documentation by the support engineers of the fault notification points and remedies as they are encountered and implemented by the end-users. In these techniques, the support engineers manually develop a support knowledge base after compilation of the source code that can include support information, such as text of the fault notification points, contexts in which the fault notification points occur, and actions that can be taken to remedy the faults.

US 2005/038832 A1 describes a system, method and computer readable medium for performing error recovery for an application. The method on a computer includes capturing an error in the execution of the application, wherein information is associated with the error and generating an identifier for the error based on the information associated with the error. The method further includes generating a message for a third party, the message including the identifier, and sending the message to the third party. The method further includes receiving the solution from the third party and applying the solution to the application so as to cure the error, if the third party finds a solution to the error based on the identifier.

US 2006/143594 A1 describes systems and methods that generate documentation discovered by programmatic and/or automatic code analysis. The generated documentation can be related to, for example, security, error conditions, permissions, exceptions, etc. Static code analysis and/or runtime analysis can be utilized to provide more complete, updated and/or accurate documentation as compared to conventional techniques by obtaining information, which can be utilized to automatically generate the documentation. According to an aspect of the subject invention, documentation can be generated that can supplement existing documentation.

### SUMMARY

It is an object to provide an improved approach for using application development data to instantiate support information.

This object is achieved by a method of claim 1, and by a system of claim 7.

### BRIEF DESCRIPTION OF THE DRAWINGS

Other objects and advantages of the invention will become apparent to those skilled in the relevant art(s) upon reading the following detailed description of preferred embodiments, in conjunction with the accompanying drawings, in which like reference numerals have been used to designate like elements, and in which:

FIG. 1 illustrates an exemplary environment for using application development data to instantiate support information and for providing the support information instantiated using the application development data;

FIG. 2 illustrates an exemplary method for providing support information instantiated using application development data; and

FIG. 3 illustrates an exemplary method for using application development data to instantiate support information.

### DETAILED DESCRIPTION

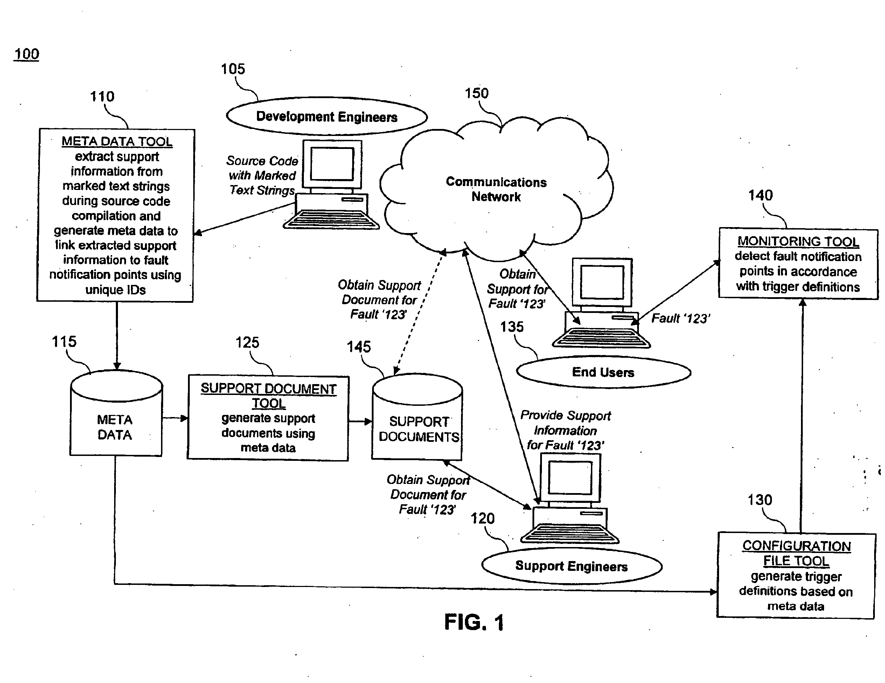

FIG. 1 illustrates an exemplary environment 100 for using application development data to instantiate support information and for providing the support information instantiated using the application development data. The systems and methods for using application development data to instantiate support information, as disclosed herein, can use data generated and maintained as part of product development processes to substantially improve initial knowledge that is loaded into a support knowledge base. Additionally, exemplary embodiments automate manual fault trigger configuration processes in which development engineers create trigger definitions, or configuration files, that specify when an application monitoring program can determine that a fault notification point occurs.

Thus, by using application development data to instantiate support information, the systems and methods, as disclosed herein, can ensure that all fault notification points encoded in applications by development engineers are documented and included in monitoring and support processes. In this way, support engineers can be alleviated from having to respond to end-users about notification points, for which they have no knowledge or documentation, and can also ensure that up-to-date triggering information is available for accurate determination of fault notification points. Exemplary embodiments can automatically generate meta data during the software application build process to improve subsequent monitoring and support processes. The explanation will be by way of exemplary embodiments to which the present invention is not limited.

Exemplary environment 100 includes means, such as meta data tool 110, for automatically detecting, during compilation of application source code, marked text strings describing fault notification points, extracting support information from each marked text string, and generating meta data linking the extracted support information with the corresponding fault notification points using unique identifiers. For example, in the embodiment of FIG. 1, environment 100 includes development engineers 105, who develop source code for software applications. In accordance with an exemplary embodiment, the development engineers 105 can identify text strings in the application source code describing fault notification points by using a predetermined marker or character/character string that is readable by the meta data tool 110. An exemplary marked text string is shown in which a predetermined marker "<%>" is employed to identify a fault notification point.

```
      InvokeError(msgNum, nCritical, "<%>All attempts to
     contact client %s have failed ! Exiting.</%>",
clientName)
```

Those skilled in the relevant art(s) will understand that other predetermined markers/characters can be used to identify fault notification points in the source code.

Thus, the meta data tool 110 is configured as a recognizer tool for parsing out portions of source code, which are identified using a predetermined marking mechanism and which describe error messages, or fault notification points. Various, readily available, external tools can be configured to read source code comments (e.g., existing tools can be used to generate API documentation in HTML format from comments in the source code). An example of an external tool configured to read source code comments is described in U.S. Patent Number 7,024,365, assigned to Hewlett-Packard Development Company, L.P. (Koff *et al.*). The tool described in the '365 patent can extract marked localizable text strings of source code on which an internationalization tool can be run.

Similarly, the meta data tool 110 is configured to automatically extract support information from each marked text string in the source code describing fault notification points. The support information for each marked text string can include fault notification point text, such as the text of the error message that will be displayed to an end user when the fault notification point is triggered during run time. The support information can also include the context, or conditions, that produced the fault, as well as actions the end user can take to remedy the fault. An exemplary error message and exemplary support information, including context and remedy information, are shown below.

```
      /**
    **spttxt: The program is attempting to validate the
 credentials on the remote agent via TCP/IP. At this
  point the connection has been made, but the initial
   security handshake has not been made.
  **sptrem: Any failure at this point represents a
  security issue. Validate that all firewalls allow
    traffic over port 1024 and that the remote system is
     configured to allow communication from this host.
  Also check for valid installed certificates at the
  remote system.
   */
 if (validateSecurity(clientNode, READ) != APPROVED)
         handleError(ERROR_INVALIDCREDENTIALS, CRITICAL,
                       "<%>Unable to validate security
 credentials on %s</%>", clientName);
```

Further, the meta data tool 110 is configured to generate meta data 115 linking the extracted support information with the corresponding fault notification points using unique identifiers. For example, the meta data 115 can be used to express a relationship between a unique numerical identifier for a fault notification point (e.g., "123" for the example shown in FIG. 1) and the extracted message text, context, and action support information. In an exemplary implementation, the meta data 115 can be expressed using extensible markup language (XML). In this way, the meta data tool 110 can automatically provide a support knowledge base for a software application, prior to its being released, to eliminate the need for manual documentation processes by development engineers during product development and by support engineers through discovery following product release.

Exemplary environment 100 further includes means, such as support document tool 125, for creating support documents 145 based on the meta data 115. For example, support document tool 125 can be used to generate web-based support pages accessible by support engineers 120 and end users 135, if desired, via a communications network 150. Optionally, a search engine can be used in conjunction with the web-based support pages to facilitate the searching of the support documents for specific fault notification points. Further, in an exemplary implementation, the support document tool 125 can be configured to enable the support engineers 120 to augment the support documents 145 with additional support information after the documents have been created. For example, the support engineers 120 might identify common causes or configurations that are most likely to generate a specified error message. Additionally, they might find that there is a "work around" that prevents the error message, while not actually solving the original problem causing the fault. These causes, configurations, and work arounds found in the field can be used to augment the support documentation, which then becomes a growing body of knowledge related to the specific problem/fault.

In an exemplary implementation, environment 100 includes means, such as configuration file tool 130, for processing the meta data 115 to automatically generate trigger definitions specifying contexts that produce the fault notification points during run time of the application. For example, the trigger definitions can be implemented as configuration files that control a monitoring program, such as monitoring tool 140, which monitors the application for fault notification points during execution, or run time. In other words, the configuration files can specify when the monitoring tool 140 should detect that one of the notification points has arisen. In this way, the configuration file tool 130 can automatically create trigger definitions using the support knowledge base generated by the meta data tool 110, upon compilation of the source code, to eliminate the need for manual trigger definition creation by development engineers during product development.

In an exemplary implementation, environment 100 includes means, such as monitoring tool 140, for monitoring the application during run time to detect the fault notification points in accordance with the trigger definitions. For example, the monitoring tool 140 can be configured to alert the end users 135 when fault notification points occur so that the end users 135 can obtain support information to remedy the faults.

In another exemplary implementation, environment 100 includes means, such as support documents database 145, for providing support information corresponding to the detected fault notification points using support documents created based on the meta data 115 generated during compilation of application source code. In the embodiment of FIG. 1, environment 100 includes support engineers 120, who can access the support documents 145 to provide appropriate support information to the end users 135 via the communications network 150. Optionally, environment 100 is configured such that the end users 135 can access the support documents 145 directly via the communications network 150.

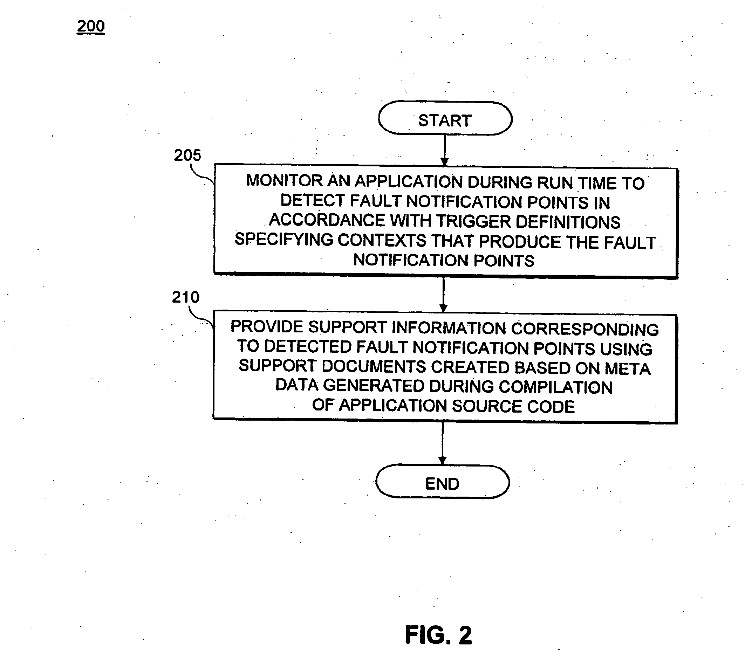

FIG. 2 illustrates a method 200 for providing support information instantiated using application development data in accordance with exemplary embodiments. Not all of the steps of FIG. 2 have to occur in the order shown, as will be apparent to persons skilled in the relevant art(s) based on the teachings herein. Other operational and structural embodiments will be apparent to persons skilled in the relevant art(s) based on the following discussion. These steps are described in detail below.

In step 205, an application is monitored during run time to detect fault notification points in accordance with trigger definitions specifying contexts that produce the fault notification points. For example, the monitoring tool 140, shown in the embodiment of FIG. 1, can be employed to monitor the application during run time for the contexts that produce the fault notification points, and can be configured to alert the end users 135 when fault notification points are detected. Once alerted, the end users 135 can contact the support engineers 120 via the communications network 150 to obtain support information pertaining to the detected fault notification points.

In step 210, support information corresponding to the detected fault notification points is provided using support documents created based on meta data generated during compilation of application source code. In an exemplary embodiment, the meta data is generated by automatically detecting marked text strings in the application source code that describe the fault notification points and extracting support information from each marked text string that corresponds to the fault notification points. In another exemplary embodiment, the trigger definitions are automatically generated by processing the meta data. Optionally, in step 210, an XML file comprising the meta data can be generated.

For example, the support engineers 120, shown in the embodiment of FIG. 1, can access the support documents 145 pertaining to the detected fault notification points to provide the applicable support information to the end users 135 via the communications network 150. In an exemplary implementation, the support documents 145 can be provided to the end users 135 via the communications network 150. In this case, the end users 135 can access the support information directly, without having to first communicate with the support engineers 120. In an exemplary implementation, the support information provided for each of the detected fault notification points includes fault notification point text, the context that produced the fault, and actions for remedying the fault.

In an exemplary implementation, the meta data tool 110, shown in the embodiment of FIG. 1, can be employed to generate the meta data 115. For example, the development engineers 105 can identify text strings in the application source code that describe the fault notification points with a predetermined marker or character/character string. The meta data tool 110 can be configured such that during compilation of the application source code, the predetermined marker or character/character strings used by the development engineers 105 are detected, and the support information from each of the detected marked text strings is extracted. In an exemplary implementation, the configuration file tool 130, shown in the embodiment of FIG. 1, can be employed to process the meta data 115 to generate the trigger definitions. In another exemplary implementation, the support document tool 125 can be employed to create the support documents 145 based on the meta data 115.

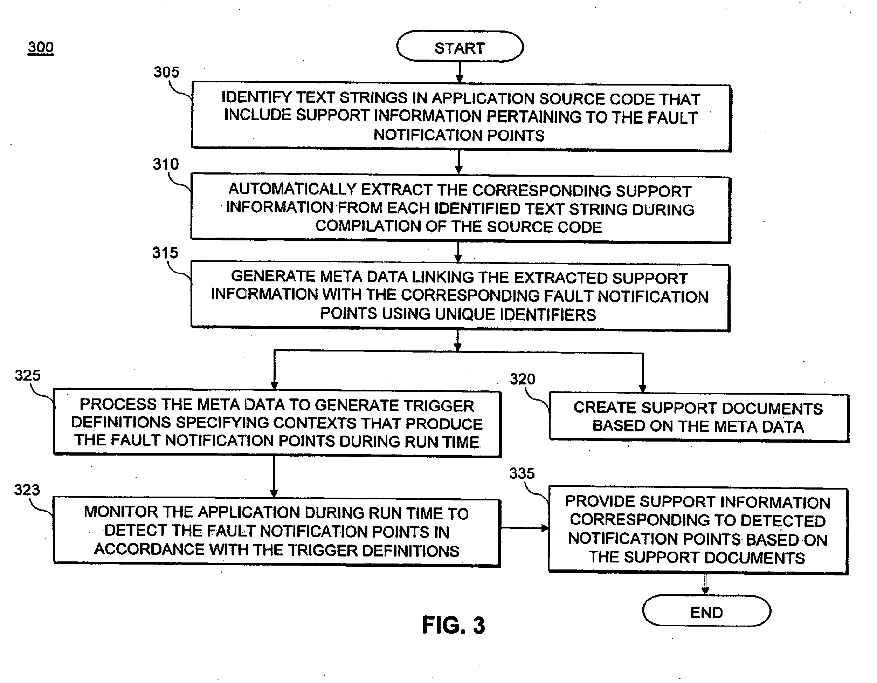

FIG. 3 illustrates a method 300 for using application development data to instantiate support information in accordance with exemplary embodiments. Not all of the steps of FIG. 3 have to occur in the order shown, as will be apparent to persons skilled in the relevant art(s) based on the teachings herein. Other operational and structural embodiments will be apparent to persons skilled in the relevant art(s) based on the following discussion. These steps are described in detail below.

In step 305, text strings are identified in application source code that describe fault notification points. The text strings can include support information pertaining to the fault notification points. For example, during development of the application source code, the development engineers 105, shown in the embodiment of FIG. 1, can identify the text strings in the application source code that describe the fault notification points with a predetermined marker or character/character string. Optionally, step 305 can include identifying log calls in the application source code that describe the fault notification points. In this case, the development engineers 105 can identify log calls in the application source code that describe the fault notification points with the predetermined marker or character/character string instead of, or in addition to, identifying the text strings that describe the fault notification points.

In step 310, the support information is automatically extracted from each identified text string during compilation of the application source code. For example, meta data tool 110, shown in the embodiment of FIG. 1, can be configured to detect the predetermined marker or character/character string used by the development engineers 105 to identify the text strings describing the fault notification points, and to extract the support information from the detected marked text strings. In one implementation, the extracted support information for each identified text string can include fault notification point text, a context that produced the fault, and actions for remedying the fault. Optionally, step 310 can include storing the extracted support information for each text string as unique entries in a message catalog.

In step 315, meta data is generated linking the extracted support information with the corresponding fault notification points using unique identifiers. For example, meta data tool 110, shown in the embodiment of FIG. 1, can be configured to link the extracted support information with the corresponding fault notification points using unique numerical identifiers associated with each of the fault notification points. Optionally, step 315 can include generating an XML file comprising the meta data. In one implementation, the XML file can be used for developing the support documents in step 320.

In step 320 support documents are created based on the meta data. For example, support document tool 125, shown in FIG. 1, can be configured to generate the support documents 145 using the meta data 115 generated in step 315 for use by the support engineers 120 in assisting the end users 135. Optionally, step 320 can include augmenting the support documents with additional support information after compilation of the application source code. For example, if the support engineers 120 discover additional support information for a particular fault notification point, the support document tool 125 can be used to augment the corresponding support documents 145 with the additional support information, such as causes, configurations, and work arounds found in the field.

In one implementation, the method 300 includes step 325. In step 325, the meta data is processed to automatically generate trigger definitions specifying contexts that produce the fault notification points during run time. For example, configuration file tool 130, shown in the embodiment of FIG. 1, can be configured to process the meta data 115 generated in step 315 to generate the trigger definitions.

In one implementation, the method 300 includes step 323. In step 323, the application is monitored during run time to detect the fault notification points in accordance with the trigger definitions. For example, the monitoring tool 140, shown in FIG. 1, can be configured to monitor the application and alert the end users 135 when contexts arise that produce the fault notification points.

In one implementation, the method 300 includes step 335. In step 335, support information is provided corresponding to the detected fault notification points based on the support documents. For example, the support engineers 120, shown in embodiment of FIG. 1, can access the support documents 145 pertaining to the detected fault notification points to provide the applicable support information to the end users 135 via the communications network 150. Optionally, step 335 can include providing the support documents to an end user via a communications network. In this case, the end users 135 can directly access the support documents 145, for example, via web pages configured with a search engine.

The present invention has been described with reference to several exemplary embodiments, however, it will be readily apparent to persons of skill in the relevant art(s) that it is possible to embody the invention in specific forms other than those of the exemplary embodiments described above. These exemplary embodiments are merely illustrative and should not be considered restrictive in any way. The scope of the invention is given by the appended claims, rather than the preceding description, and all variations and equivalents which fall within the range of the claims are intended to be embraced therein.

## Claims

1. A method for using application development data to create support documents, comprising:
identifying (305) text strings marked using a predetermined marker or character/character string in application source code, the text strings describing fault notification points and comprising support information pertaining to the fault notification points;
automatically extracting (310) the support information from each identified text string during compilation of the application source code;
generating (315) meta data linking the extracted support information with the corresponding fault notification points using unique identifiers; and
creating (320) support documents based on the meta data.

2. The method of claim 1, wherein
the support information for each identified text string includes fault notification point text, a context that produced the fault, and actions for remedying the fault;
the extracting (310) comprises storing the extracted support information for each text string as unique entries in a message catalog;
the generating (315) meta data comprises generating an extensible markup language (XML) file comprising the meta data; and
the creating (320) support documents comprises augmenting the support documents with additional support information.

3. The method of claim 1, further comprising:
processing (325) the meta data to automatically generate trigger definitions that control a monitoring program (140), which monitors the application for fault notification points during execution or run time.

4. The method of claim 3, further comprising:
monitoring (205, 323) the application during run time using the monitoring program (140) to detect the fault notification points.

5. The method of claim 4, further comprising:
providing (335) support information corresponding to the detected fault notification points based on the support documents, wherein the support documents are provided to an end user via a communications network.

6. The method of claim 4, furthermore comprising:
providing, for each of the detected fault notification points, fault notification point text, the context that produced the fault, and actions for remedying the fault, or providing the support documents to an end user via a communications network, wherein an extensible markup language (XML) file comprising the meta data is generated.

7. A system for using application development data to create support documents, comprising:
means (140) for
automatically detecting in application source code, during compilation of the application source code, text strings marked using a predetermined marker or character/character string, the text strings describing fault notification points and comprising support information pertaining to the fault notification points,
extracting support information from each marked text string, and generating meta data linking the extracted support information with the corresponding fault notification points using unique identifiers; and
means (125) for creating support documents based on the meta data.

## Patentansprüche

1. Verfahren zur Verwendung von Anwendungsentwicklungsdaten zum Erstellen von Hilfsdokumenten, wobei das Verfahren umfasst:
Identifizieren (305) von Textzeichenfolgen, die mit einer vorbestimmten Markierung oder einem vorbestimmten Zeichen/einer vorbestimmten Zeichenfolge im Anwendungsquellcode markiert sind, wobei die Textzeichenfolgen Fehlermeldungspunkte beschreiben und Hilfsinformationen die Fehlermeldungspunkte betreffend umfassen;
automatisches Extrahieren (310) der Hilfsinformationen aus jeder identifizierten Textzeichenfolge bei Kompilierung des Anwendungsquellcodes;
Erzeugen (315) von Metadaten, welche die extrahierten Hilfsinformationen unter Verwendung eindeutiger Bezeichner mit den entsprechenden Fehlermeldungspunkten verbinden; und
Erstellen (320) von Hilfsdokumenten basierend auf den Metadaten.

2. Verfahren nach Anspruch 1, wobei
die Hilfsinformationen für jede identifizierte Textzeichenfolge Fehlermeldungspunkttext, einen Kontext, der den Fehler erzeugt hat, und Maßnahmen zur Behebung des Fehlers beinhalten;
das Extrahieren (310) das Speichern der extrahierten Hilfsinformationen für jede Textzeichenfolge als einzelne Einträge in einen Meldungskatalog umfasst;
das Erzeugen (315) von Metadaten das Erzeugen einer die Metadaten umfassenden Extensible-Markup-Language-(XML-)Datei umfasst; und
das Erstellen (320) von Hilfsdokumenten das Hinzufügen zusätzlicher Hilfsinformationen zu den Hilfsdokumenten umfasst.

3. Verfahren nach Anspruch 1, wobei das Verfahren ferner umfasst:
Verarbeiten (325) der Metadaten, um automatisch Triggerdefinitionen zu erzeugen, die ein Überwachungsprogramm (140) steuern, das die Anwendung hinsichtlich Fehlermeldungspunkte während der Ausführung oder Laufzeit überwacht.

4. Verfahren nach Anspruch 3, wobei das Verfahren ferner umfasst:
Überwachen (205, 323) der Anwendung während der Laufzeit mithilfe des Überwachungsprogramms (140), um die Fehlermeldungspunkte zu erfassen.

5. Verfahren nach Anspruch 4, wobei das Verfahren ferner umfasst:
Bereitstellen (335) der den erfassten Fehlermeldungspunkten entsprechenden Hilfsinformationen basierend auf den Hilfsdokumenten, wobei die Hilfsdokumente einem Endnutzer über ein Kommunikationsnetz bereitgestellt werden.

6. Verfahren nach Anspruch 4, wobei das Verfahren ferner umfasst:
Bereitstellen von Fehlermeldungspunkttext, des Kontexts, der den Fehler erzeugt hat, und Maßnahmen zum Beheben des Fehlers für jeden der erfassten Fehlermeldungspunkte, oder Bereitstellen der Hilfsdokumente für einen Endnutzer über ein Kommunikationsnetz, wobei eine die Metadaten umfassende Extensible-Markup-Language (XML)Datei erzeugt wird.

7. System zur Verwendung von Anwendungsentwicklungsdaten zum Erstellen von Hilfsdokumenten, wobei das System umfasst:
Mittel (140) zum
automatischen Erfassen im Anwendungsquellcode bei der Kompilierung des Anwendungsquellcodes, von Textzeichenfolgen, die mit einer vorbestimmten Markierung oder einem bestimmten Zeichen/einer vorbestimmten Zeichenfolge im Anwendungsquellcode markiert sind, wobei die Textzeichenfolgen Fehlermeldungspunkte beschreiben und Hilfsinformationen die Fehlermeldungspunkte betreffend umfassen;
Extrahieren von Hilfsinformationen aus jeder markierten Textzeichenfolge, und
Erzeugen von Metadaten, die die extrahierten Hilfsinformationen mit den entsprechenden Fehlermeldungspunkten unter Verwendung eindeutiger Bezeichner verbinden; und
Mittel (125) zum Erstellen von Hilfsdokumenten basierend auf den Metadaten.

## Revendications

1. Procédé pour utiliser des données de développement d'application pour créer des documents de support, comprenant :
identifier (305) des chaînes de texte marquées à l'aide d'un marqueur prédéterminé ou d'un caractère/chaîne de caractères prédéterminé(e) dans un code source d'application, les chaînes de texte décrivant des points de notification d'anomalie et comprenant des informations de support concernant les points de notification d'anomalie ;
extraire automatiquement (310) les informations de support à partir de chaque chaîne de texte identifiée durant la compilation du code source d'application ;
générer (315) des métadonnées liant les informations de support extraites aux points de notification d'anomalie correspondants à l'aide d'identificateurs uniques ; et
créer (320) des documents de support sur la base des métadonnées.

2. Procédé selon la revendication 1, dans lequel :
les informations de support pour chaque chaîne de texte identifiée comprennent un texte de point de notification d'anomalie, un contexte qui a produit l'anomalie, et des actions pour remédier à l'anomalie ;
l'extraction (310) comprend le stockage des informations de support extraites pour chaque chaîne de texte sous la forme d'entrées uniques dans un catalogue de message ;
la génération (315) de métadonnées comprend la génération d'un fichier de langage de balisage extensible (XML) comprenant les métadonnées ; et
la création (320) de documents de support comprend l'augmentation des documents de support par des informations de support supplémentaires.

3. Procédé selon la revendication 1, comprenant en outré :
traiter (325) les métadonnées pour générer automatiquement des définitions de déclencheur qui commandent un programme de surveillance (140), qui surveille l'application pour des points de notification d'anomalie durant une exécution ou un temps d'exécution.

4. Procédé selon la revendication 3, comprenant en outré :
surveiller (205, 323) l'application durant le temps d'exécution à l'aide du programme de surveillance (140) pour détecter les points de notification d'anomalie.

5. Procédé selon la revendication 4, comprenant en outré :
fournir (335) des informations de support correspondant aux points de notification d'anomalie détectés sur la base des documents de support, les documents de support étant fournis à un utilisateur final par l'intermédiaire d'un réseau de communication.

6. Procédé selon la revendication 4, comprenant en outré :
fournir, pour chacun des points de notification d'anomalie détectés, un texte de point de notification d'anomalie, le contexte qui a produit l'anomalie, et des actions pour remédier à l'anomalie, ou fournir les documents de support à un utilisateur final par l'intermédiaire d'un réseau de communication, un fichier de langage de balisage extensible (XML) comprenant les métadonnées étant généré.

7. Système pour utiliser des données de développement d'application pour créer des documents de support, comprenant :
un moyen (140) pour
détecter automatiquement dans un code source d'application, durant la compilation du code source d'application, des chaînes de texte marquées à l'aide d'un marqueur prédéterminé ou d'un caractère/chaîne de caractères prédéterminé(e), les chaînes de texte décrivant des points de notification d'anomalie et comprenant des informations de support concernant les points de notification d'anomalie,
extraire des informations de support à partir de chaque chaîne de texte marquée, et
générer des métadonnées liant les informations de support extraites aux points de notification d'anomalie correspondants à l'aide d'identificateurs uniques ; et
un moyen (125) pour créer des documents de support sur la base des métadonnées.
